# EUROPEAN PATENT SPECIFICATION

(11) **EP 0 719 159 B1**
(45) Date of publication and mention of the grant of the patent: **21.05.1997**
(21) Application number: 94927144.9
(22) Date of filing: 09.09.1994
(51) Int. Cl.: C01B 21/30, C01B 21/32

(54) **METHOD AND MEANS FOR GENERATING NITRIC OXIDE**
VERFAHREN UND VORRICHTUNG ZUM ERZEUGEN VON STICKSTOFFOXYDE
PROCEDE ET DISPOSITIF DE PRODUCTION D'OXYDE NITRIQUE

(30) Priority: 13.09.1993 SE 9302967; 14.09.1993 SE 9303038
(43) Date of publication of application: 03.07.1996
(73) Proprietor: AGA AKTIEBOLAG, 181 81 Lidingö (SE)
(72) Inventor: JACOBSEN, Niels, S-127 49 Skärholmen (SE)
(74) Representative: Wiedemann, Bernd
(86) International application number: SE9400839
(87) International publication number: WO9507610

(56) References cited:
- EP-A- 0 472 799
- SE-B- 398 739
- SE-C- 140 573

## Description

The present invention relates to a method and to a device for producing a gaseous mixture which contains nitrogen, oxygen and nitrogen monoxide (nitric oxide).

Breathing gases containing minor quantities of nitrogen monoxide as the active component are used medically for treating asthma, other forms of bronchial constrictions, and serious interruptions in breathing, among other things.

The gaseous mixture is at present produced by mixing nitrogen monoxide with a suitable carrier gas. The nitrogen monoxide is produced on a large scale and is normally delivered in a pressure container. The resultant nitrogen monoxide-containing gas is also stored in pressure containers.

The drawback with producing the nitrogen monoxide-containing gas mixture in this way is that different quantities or concentrations of nitrogen monoxide require the use of separate gas containers or complicated gas mixing systems. Furthermore, the gas containers used are extremely heavy and consequently the use of the gas mixture is limited to the place where the container is placed.

One object of the present invention is to provide a method of producing a gas mixture which contains nitrogen, oxygen and nitrogen monoxide on the basis of a starting material that contains nitrogen and oxygen.

Another object of the invention is to provide a device for producing a gas mixture containing nitrogen, oxygen and nitrogen monoxide on the basis of a starting material that contains nitrogen and oxygen.

Another object of the invention is to provide a portable and battery-driven device for producing the nitrogen monoxide-containing gas.

The present invention thus relates to a novel method of producing a gas mixture which contains nitrogen, oxygen and nitrogen monoxide. The starting material used is a gas composition containing oxygen and nitrogen. The method is characterized by passing the gas composition through a zone in which a glow discharge is generated. Advantageous embodiments of the invention are set forth in the dependent Claims.

The device for producing a gas mixture containing nitrogen, oxygen and nitrogen monoxide includes a reaction chamber, a starting-material inlet opening in the reaction chamber, this starting material containing nitrogen and oxygen, a gas-mixture outlet opening in the reaction chamber, and means for generating a glow discharge in the reaction chamber.

The inventive method and device enable the production of nitrogen monoxide-containing gas mixtures which contain up to 10,000 ppm nitrogen monoxide.

The invention will now be described with reference to a non-limiting exemplifying embodiment thereof and also with reference to the accompanying drawings, in which
Fig. 1 illustrates schematically a graph showing the voltage as a function of current when an electric current passes between two mutually spaced electrodes within the glow discharge interval;
Fig. 2 illustrates schematically a first exemplifying embodiment of an inventive nitrogen monoxide-producing device;
Fig. 3 illustrates schematically a second exemplifying embodiment of the inventive nitrogen monoxide-producing device; and
Fig. 4 illustrates schematically means for handling gas upstream and downstream of the nitrogen monoxide-producing device.

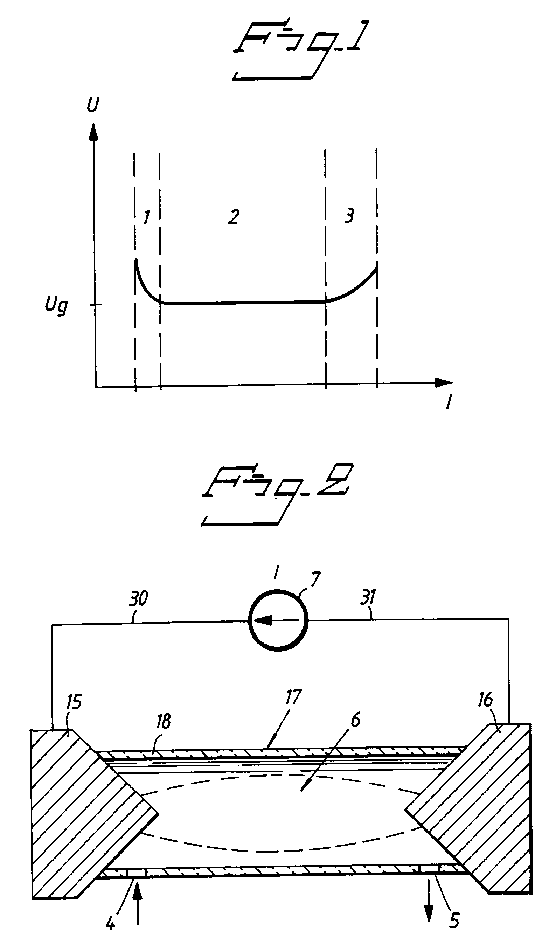

The device illustrated in Fig. 2 includes a tubular casing 18 made of insulating material. Two electrodes 15, 16 are mounted sealingly in a respective end of the casing, such as to obtain a reaction chamber 17 defined by the casing 18 and the electrodes 15, 16. The electrodes 15, 16 are spaced apart so as to obtain a glow discharge within a current interval. The casing 18 includes a starting-material inlet opening 4 and an outlet opening 5 for the gas mixture produced, this mixture including nitrogen monoxide. The electrodes 15 and 16 are connected to an electric current source 7 by cables or lines 30, 31. Those parts of the electrodes 15, 16 that are located outside the reaction chamber are cooled by ambient air.

The device is set into operation by supplying a nitrogen and oxygen-containing gas continuously through the inlet opening and applying a high voltage across the electrodes 15, 16 after a breakthrough has occurred. The current is held constant after it has increased to a desired working point in the glow discharge region. The pressure is regulated to a level of at most 3 bars, in the present example to atmospheric pressure.

Fig. 1 illustrates voltage, U, as a function of current strength, I, in the glow-discharge interval. A breakthrough, i.e. glow discharge, is obtained in the region 6 between the electrodes 15, 16 in Fig. 2 when the current strength increases from the low values to the value of the left broken line in the interval referenced 1 (Fig. 1). It will be seen from the graph in Fig. 1 that the interval 1 always has decreasing voltage values with increasing current strengths. The glow discharge in the interval 1 is referred to as a sub-normal glow discharge.

When the current strength increases from the interval 1, there is reached an interval 2 in which there is obtained an essentially constant voltage as a function of the current strength. When the current strength is increased from the interval 2, there is obtained a voltage increase as a function of current strength. This interval 3 is referred to as an abnormal glow discharge. The inventive nitrogen monoxide generator has a working range within the intervals 1, 2 and 3. The voltage of the normal glow discharge will usually lie within 100 to 1,000 volts and is referenced U_{g}.

At still higher current strengths, regions outside the interval 3 are reached, where there is obtained a discontinuous drop in voltage to a value far beneath U_{g}, i.e. a value of at most 50 volts. An arc discharge occurs in this interval. If the current strength is lowered from the arc discharge interval, the interval 3 is again reached. However, it is often necessary to lower the current strength to a value lower than the upper limit of the interval 3. This results in a so-called hysteresis effect.

The reaction chamber 18 shown in Fig. 2 may also be defined by side walls 18 and end-walls not shown. In this case, the electrodes 15, 16 are inserted through respective end-walls and spaced at a predetermined distance apart. According to one embodiment, explained below, the electrodes 15, 16 may be movable in relation to one another, wherein one or both electrodes 15, 16 may be movably arranged.

The electrodes 15, 16 can be cooled with a liquid coolant or with ambient air. The inlet and outlet openings 4 and 5 may also be provided in the electrode walls. The mutually facing ends of the electrodes 15, 16 may be conical, as shown in Fig. 2, or may have some other shape, for instance a hemispherical shape.

The device will preferably include means for initiating the glow discharge, for instance in the form of a separate current source which produces a high voltage pulse, or a high frequency alternating voltage which is applied across two ignition electrodes. These electrodes may be different from the working electrodes 15, 16 and may be placed outside the insulating casing. The glow discharge may also be initiated by temporarily lowering the pressure in the reaction chamber 17, with the aid of a pump. Still another method of initiating the glow discharge is to reduce the gap between the ends of the electrodes 15, 16 until contact is made, and then apply an electric current and subsequently move the electrodes apart through a desired distance.

The current source obtains energy from a battery (not shown) or from a mains network. The current source delivers current and has an internal resistance such as to maintain an at least generally stable glow discharge. The current source may deliver direct current or alternating current, it being necessary for this latter current to have a zero transition which is so rapid as to render it unnecessary to restart the glow discharge after the zero transition.

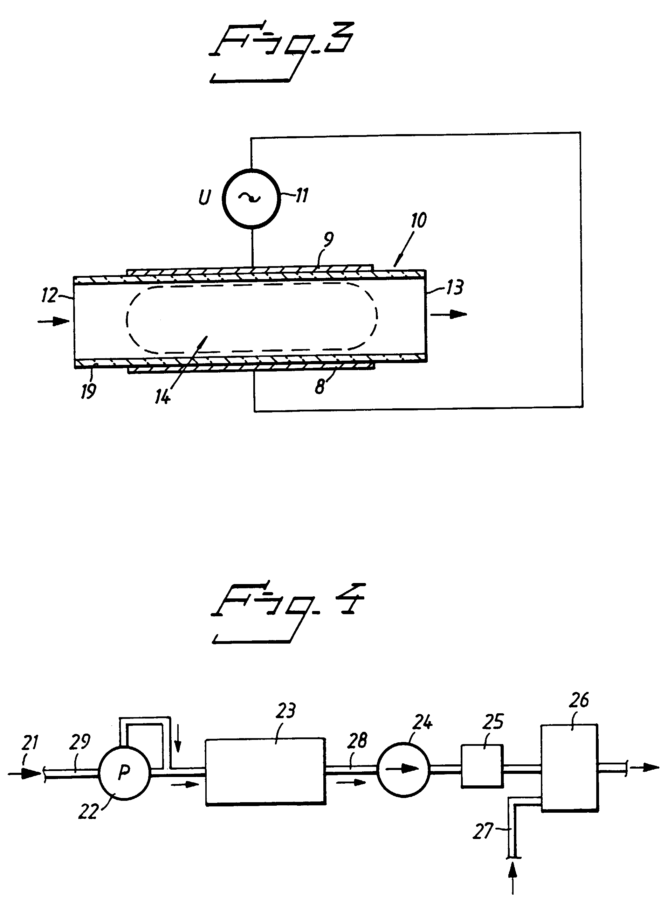

Fig. 3 illustrates an embodiment in which a reaction chamber 10 is delimited by pairs of mutually parallel side walls 19 which, although not shown, may be provided with end-walls having a starting material inlet opening 12 in one end-wall and an outlet opening 13 for the nitrogen monoxide-containing gas mixture in the other end-wall. Two electrodes 8, 9 are arranged outside two pairs of parallel side-walls 19. The electrodes 8 and 9 are connected to a high frequency alternating current generator 11.

The alternating current generator 11 is powered by a battery (not shown) or by a mains network.

After starting to deliver starting material continuously to the reaction chamber, an alternating voltage of sufficiently high frequency, at least 1 Mhz, is applied across the electrodes. This results in a glow discharge zone 14 in the reaction chamber 10. The resultant product is removed through the outlet opening 13.

In order to obtain conditions which remain constant as far as possible, the device will preferably include a pressure regulator 22, see Fig. 3, mounted in a line 29 which connects a source 21 of starting material with the inlet opening 4, 12 in the inventive nitrogen monoxide-generating device, referenced 23 in Fig. 3. The device 23 corresponds to the device illustrated in Fig. 2 and Fig. 3.

If it is elected to work with a subpressure in the reaction chamber 23, a pump 24 may be included in a line 28 that connects the outlet opening 5, 13 (Figs. 2 and 3 respectively) with a source or with a consumer. The pump 24 functions to increase the output gas pressure to atmospheric pressure. The working pressure in the inventive device will normally lie between 0.01 and 3 bars.

In order to ensure that there is obtained a product without undesirable secondary products, for instance other nitrogen oxides or ozone, a filter 25 may be arranged in the line 28. Filters for this purpose are well known to the skilled person.

Finally, a mixing device 26 may also be provided in the line 28. This device is supplied through a line 27 with a gas which contains oxygen and optionally also nitrogen, for instance air, which lowers the concentration of nitrogen monoxide to a desired low value. The concentration of nitrogen monoxide may also be adjusted by controlling the current to the current source 7 or to the alternating current generator 11 respectively.

The inventive method and inventive device enables nitrogen monoxide to be produced in a concentration range of 10-10,000 ppm.

### Example

The device illustrated in Fig. 2 was used to produce a nitrogen monoxide-containing gas mixture which also contained nitrogen and oxygen. Air was introduced into the reaction chamber 17 at a flow rate of 10 liters per minute and the chamber was maintained at a pressure of 1.3 bars. A current of 40 mA was applied to the electrodes 15, 16. The resultant voltage across the discharge was 800 volts. The air leaving the reaction chamber contained about 500 ppm nitrogen monoxide (NO) and less than 10 ppm nitrogen dioxide (NO₂).

The present invention affords the primary advantage of enabling nitrogen monoxide to be produced with relatively good efficiency without producing undesirable secondary products in the form of other nitrogen oxides, such as nitrogen dioxide and ozone for instance, or only producing such secondary products to a generally negligible extent. Furthermore, when practicing the present invention, there are produced no high voltage pulses that can result in electromagnetic disturbances in operation. Stable nitrogen monoxide production is obtained in practice. The glow discharge can be sustained continuously. Repeated ignition or triggering is avoided. The ignition sequence cannot be reproduced.

## Claims

1. A method of producing a gas mixture containing nitrogen, oxygen and nitrogen monoxide, **characterized** by passing a gas composition containing nitrogen and oxygen through a zone in which a glow discharge is generated.

2. A method according to Claim 1, **characterized** by maintaining the glow discharge zone at a pressure of at most 5 bars, preferably at most 3 bars.

3. A method according to Claim 1 or Claim 2, **characterized** by generating the glow discharge with the aid of a battery as an energy source.

4. A method according to one or more of Claims 1-3, **characterized** in that the gas composition is air.

5. A device for producing a gas mixture containing nitrogen, oxygen and nitrogen monoxide, said device including a reaction chamber (17, 10), an inlet opening (4, 12) in the reaction chamber (17, 10) for the introduction of a gas containing nitrogen and oxygen, an outlet opening (5, 13) in the reaction chamber (17, 10) for the removal of the gas mixture, and means (15, 16, 7; 8, 9, 11) for generating a glow discharge in the reaction chamber (17, 10).

6. A device according to Claim 5, **characterized** in that the glow-discharge generating means includes two electrodes (15, 16) which are inserted into or mounted in the chamber (17) and which are mutually spaced apart at a predetermined distance from one another and connected to a current source (7).

7. A device according to Claim 5, **characterized** in that the glow-discharge generating means includes two electrodes (8, 9) which are placed outside the chamber (10) and which are connected to a generator (11) for high frequency alternating voltage.

8. A device according to Claim 6, **characterized** in that the current source is a direct current source, preferably a constant current generator.

## Patentansprüche

1. Verfahren zum Herstellen einer Stickstoff, Sauerstoff und Stickstoffmonoxid enthaltenden Gasmischung, gekennzeichnet durch Durchleiten einer Stickstoff und Sauerstoff enthaltenden Gaszusammensetzung durch einen Bereich, in dem eine Glimmentladung erzeugt wird.

2. Verfahren nach Anspruch 1, gekennzeichnet durch Aufrechterhalten eines Druckes in dem Glimmentladungsbereich von höchstens 5 bar, vorzugsweise höchstens 3 bar.

3. Verfahren nach Anspruch 1 oder 2, gekennzeichnet durch Erzeugen der Glimmentladung mit Hilfe einer Batterie als Energiequelle.

4. Verfahren nach einem der Ansprüche 1 bis 3, dadurch gekennzeichnet, daß die Gaszusammensetzung Luft ist.

5. Vorrichtung zum Herstellen einer Stickstoff, Sauerstoff und Stickstoffmonoxid enthaltenden Gasmischung, die eine Reaktionskammer (17, 10), eine Einlaßöffnung (4,12) in der Reaktionskammer (17, 10) für das Einführen eines Stickstoff und Sauerstoff enthaltenden Gases, eine Auslaßöffnung (5, 13) in der Reaktionskammer (17, 10) für das Entfernen der Gasmischung, und Mittel (15, 16, 7; 8, 9, 11) zum Erzeugen einer Glimmentladung in der Reaktionskammer (17, 10) aufweist.

6. Vorrichtung nach Anspruch 5, dadurch gekennzeichnet, daß die Mittel zum Erzeugen der Glimmentladung zwei Elektroden (15, 16) aufweisen, die in die Kammer (17) eingesetzt oder darin angebracht sind und die in einem vorbestimmten Abstand voneinander angeordnet und mit einer Stromquelle (7) verbunden sind.

7. Vorrichtung nach Anspruch 5, dadurch gekennzeichnet, daß die Mittel zum Erzeugen der Glimmentladung zwei Elektroden (8, 9) aufweisen, die außerhalb der Kammer (10) angeordnet und mit einem Generator (11) für eine Hochfrequenz-Wechselspannung verbunden sind.

8. Vorrichtung nach Anspruch 6, dadurch gekennzeichnet, daß die Stromquelle eine Gleichstromquelle, vorzugsweise ein Konstantstromgenerator, ist.

## Revendications

1. Procédé de production d'un mélange gazeux contenant de l'azote, de l'oxygène et de l'oxyde nitrique, caractérisé par le passage d'une composition gazeuse contenant de l'azote et de l'oxygène à travers une zone dans laquelle est produite une décharge luminescente.

2. Procédé selon la revendication 1, caractérisé en ce que l'on maintient la zone de décharge luminescente à une pression d'au plus 5 bars, de préférence d'au plus 3 bars.

3. Procédé selon la revendication 1 ou 2, caractérisé en ce que l'on produit la décharge luminescente à l'aide d'un accumulateur à titre de source d'énergie.

4. Procédé selon une ou plusieurs des revendications 1 - 3, caractérisé en ce que la composition gazeuse est l'air.

5. Dispositif pour produire un mélange gazeux contenant de l'azote, de l'oxygène et de l'oxyde nitrique, ledit dispositif comprenant une chambre de réaction (17, 10), une ouverture d'entrée (4, 12) dans la chambre de réaction (17, 10) pour l'introduction d'un gaz contenant de l'azote et de l'oxygène, une ouverture de sortie (5, 13) dans la chambre de réaction (17, 10) pour le retrait du mélange gazeux, et des moyens (15, 16, 7, 8, 9, 11) pour produire une décharge luminescente dans la chambre de réaction (17, 10).

6. Dispositif selon la revendication 5, caractérisé en ce que les moyens de production de la décharge luminescente englobent deux électrodes (15, 16) qui sont insérées ou montées dans la chambre (17) et qui sont éloignées l'une de l'autre d'une distance prédéterminée et reliées à une source de courant (7).

7. Dispositif selon la revendication 5, caractérisé en ce que les moyens de production de la décharge luminescente comprennent deux électrodes (8, 9) qui sont placées à l'extérieur de la chambre (10) et qui sont connectées à un générateur (11) pour une tension alternative haute fréquence.

8. Dispositif selon la revendication 6, caractérisé en ce que la source de courant est une source de courant continu, de préférence un générateur de courant constant.
